# EUROPÄISCHE PATENTSCHRIFT

(11) **EP 2 359 254 B1**
(45) Veröffentlichungstag und Bekanntmachung des Hinweises auf die Patenterteilung: **21.08.2013**
(21) Anmeldenummer: 09782909.7
(22) Anmeldetag: 11.09.2009
(51) Int. Cl.: G06F 13/38, G06F 11/07

(54) **VERFAHREN UND SYSTEM ZUR STEUERUNG EINER KOMMUNIKATION ZWISCHEN EINEM FUNKTIONSRECHNER UND EINEM ÜBERWACHUNGSMODUL**
METHOD AND SYSTEM FOR CONTROLLING COMMUNICATION BETWEEN A FUNCTION COMPUTER AND A MONITORING MODULE
PROCÉDÉ ET SYSTÈME DE COMMANDE DE LA COMMUNICATION ENTRE UN CALCULATEUR FONCTIONNEL ET UN MODULE DE SURVEILLANCE

(30) Priorität: 11.11.2008 DE 102008043646
(43) Veröffentlichungstag der Anmeldung: 24.08.2011
(73) Patentinhaber: Robert Bosch GmbH, 70442 Stuttgart (DE)
(72) Erfinder: FU, Chengxuan, 74199 Untergruppenbach (DE)
(86) Internationale Anmeldenummer: PCT/EP2009/061797
(87) Internationale Veröffentlichungsnummer: WO 2010/054874

(56) Entgegenhaltungen:
- EP-A- 0 663 324
- DE-A1- 10 205 809
- DE-A1-102004 005 700
- US-A1- 2007 016 340

## Beschreibung

### Stand der Technik

Die Erfindung betrifft ein Verfahren und ein System zur Steuerung einer Kommunikation zwischen einem Funktionsrechner und einem Überwachungsmodul über ein Bussystem, wobei der Funktionsrechner mit dem Bussystem über ein Schnittstellenmodul verbindbar ist und wobei von dem Funktionsrechner ein Steuerzyklus gestartet wird, innerhalb dessen eine Kommunikation zwischen dem Funktionsrechner und dem Schnittstellenmodul erfolgt.

Um eine Fehlfunktion eines Funktionsrechners, beispielsweise eines sogenannten Embedded Systems, erkennen zu können und möglichst zuverlässig einen definierten Zustand wieder herstellen zu können, ist es insbesondere bei sicherheitskritischen Anwendungen bekannt, ein Überwachungsmodul vorzusehen. Das Überwachungsmodul wird beispielsweise als Watchdog bezeichnet und ermöglicht eine Frage-Antwort-Kommunikation mit dem Funktionsrechner. Dabei sendet das Überwachungsmodul zyklisch zufällig ausgewählte oder erzeugte Fragen an den Funktionsrechner, worauf dieser innerhalb einer vorgegebenen Zeitspanne eine erwartete Antwort an das Überwachungsmodul zurücksenden muss. Entspricht die Antwort nicht der erwarteten Antwort, so wird von einer Fehlfunktion des Funktionsrechners ausgegangen. Eine nicht erwartete Antwort kann hierbei eine inhaltlich nicht korrekte Antwort sein oder eine zu einem falschen Zweitpunkt an das Überwachungsmodul übermittelte Antwort.

Eine besonders hohe Zuverlässigkeit wird dadurch erreicht, dass das Überwachungsmodul von dem Funktionsrechner überwacht wird. Hierzu sendet der Funktionsrechner zu fest vorgegebenen oder zufälligen Zeitpunkten Antworten, deren Inhalt nicht dem erwarteten Inhalt entspricht oder Antworten, die nicht zu dem erwarteten Zeitpunkt an das Überwachungsmodul übermittelt werden. Stellt das Überwachungsmodul einen Fehler bei dem Funktionsrechner fest, so wird dies in einem Fehlerzähler des Überwachungsmoduls angezeigt. Auch bei dem Funktionsrechner kann ein Fehlerzähler vorhanden sein, mittels dessen ein bei dem Überwachungsmodul erkannter Fehler gekennzeichnet wird. Sendet der Funktionsrechner absichtlich eine nicht erwartete Antwort an das Überwachungsmodul und wird der Fehlerzähler in dem Überwachungsmodul nicht verändert, so kann der Funktionsrechner auf eine Fehlfunktion bei dem Überwachungsmodul schließen. Hierzu benötigt der Funktionsrechner einen Zugriff auf den Fehlerzähler des Überwachungsmoduls, was beispielsweise dadurch realisiert wird, dass der aktuelle Stand des Fehlerzählers zusammen mit einer Frage während der Kommunikation von dem Überwachungsmodul an den Funktionsrechner übermittelt wird.

Zur Realisierung der Frage-Antwort-Kommunikation wird häufig ein Bussystem, beispielsweise der sogenannte Serial Peripheral Interface (SPI)-Bus eingesetzt, wobei der Funktionsrechner als Master und das Überwachungsmodul als Slave an das Bussystem angeschlossen sind. Ferner können weitere periphere Bausteine vorgesehen sein, die ebenfalls als Slaves an das Bussystem angeschlossen sind. Der Funktionsrechner ist häufig mittels eines Schnittstellenmoduls an das Bussystem angeschlossen, wobei das Schnittstellenmodul das Senden und Empfangen von Daten beziehungsweise das Senden einer Antwort und das Empfangen einer Frage über das Bussystem ermöglicht.

Bei den bekannten Systemen zur Kommunikationssteuerung greift der Funktionsrechner in zyklischen Abständen, die beispielsweise zwei Millisekunden betragen, auf das Schnittstellenmodul zu. Derartige Schnittstellenmodule sind häufig als sogenanntes Dual Port RAM ausgebildet, das sowohl von dem Funktionsrechner als auch dem Bussystem gelesen und beschrieben werden kann. Hierzu weist das Schnittstellenmodul drei Speicherbereiche auf: Ein erster Speicherbereich ist für von dem Bussystem empfangene Daten, also beispielsweise die Fragen des Überwachungsmoduls, vorgesehen. Ein zweiter Speicherbereich ist für die von dem Funktionsrechner über das Bussystem zu sendenden Daten, also beispielsweise die an das Überwachungsmodul zu übermittelnden Antworten, vorgesehen. In einem dritten Speicherbereich können von dem Funktionsrechner Steuerbefehle abgelegt werden, die eine Steuerung des Schnittstellenmoduls durch den Funktionsrechner ermöglichen. Die in dem dritten Speicherbereich abgespeicherten Befehle können als sogenannte Queue aufgefasst werden, die die Befehle beziehungsweise Instruktionen enthält, die von dem Schnittstellenmodul abgearbeitet werden.

Bei den bekannten Schnittstellenmodulen schreibt der Funktionsrechner zyklisch Sendedaten in den zweiten Speicherbereich und Sendebefehle in den dritten Speicherbereich. Anschließend veranlasst der Funktionsrechner die Abarbeitung der Instruktionen in dem dritten Speicherbereich durch das Schnittstellenmodul. Hierzu wird beispielsweise die Queue durch den Funktionsrechner aktiviert. Ist die Queue aktiviert, so arbeitet das Schnittstellenmodul selbstständig die darin enthaltenen Befehle beziehungsweise Instruktionen ab. Je nach der Übertragungsgeschwindigkeit des Bussystems, der Anzahl der Instruktionen in der Queue und der Verarbeitungsgeschwindigkeit durch das Schnittstellenmodul dauert die Abarbeitung einer Queue einige hundert Mikrosekunden. Nachdem die Antwort an das Überwachungsmodul übermittelt ist, sendet das Überwachungsmodul eine neue Frage, die in dem ersten Speicherbereich des Schnittstellenmoduls abgespeichert wird. Von dort kann die Frage dann von dem Funktionsrechner abgeholt werden.

Bei den bekannten Kommunikationssystemen ruft der Funktionsrechner beispielsweise in Abständen von zwei Millisekunden eine Funktion für das Auslesen des ersten Speicherbereichs in dem Schnittstellenmodul auf. Anschließend berechnet der Funktionsrechner eine Antwort, wartet auf das erwartete Zeitfenster, innerhalb dessen die Antwort an das Überwachungsmodul übermittelt werden muss, schreibt die Antwort Daten in den zweiten Speicherbereich und aktiviert die Queue.

Solcherart überwachte Funktionsrechner werden beispielsweise in Steuergeräten zur Steuerung und Regelung des Betriebs von Kraftfahrzeugen eingesetzt. Hierbei muss gewährleistet sein, dass eine Fehlfunktion eines Funktionsrechners so schnell erkannt wird, dass ein fehlerhafter Momentenaufbau, also eine ungewollte Beschleunigung durch einen defekten Funktionsrechner, zuverlässig verhindert werden kann. In mit Verbrennungsmotoren angetriebenen Kraftfahrzeugen ist es häufig ausreichend, wenn eine Fehlfunktion innerhalb von vierhundert bis fünfhundert Millisekunden erkannt werden kann und beispielsweise durch das Steuergerät ein Reset des Funktionsrechners eingeleitet werden kann.

Kraftfahrzeuge, die mittels eines Hybridantriebs oder eines reinen Elektroantriebs angetrieben werden, ermöglichen jedoch einen deutlich schnelleren Aufbau eines Drehmoments. Folglich muss hier eine drastisch verkürzte Fehlerreaktionszeit, beispielsweise fünfzig bis siebzig Millisekunden, gewährleistet sein, um zuverlässig zu verhindern, dass das Fahrzeug aufgrund eines Fehlers in dem Funktionsrechner beispielsweise unerwünscht zu weit aus dem Stillstand herausbewegt wird. Dies kann nur dann gewährleistet werden, wenn die für die Leistungssteuerung verwendeten Endstufen in dem Steuergerät innerhalb der beispielweise fünfzig bis siebzig Millisekunden abgeschaltet werden, wenn die Frage-Antwort-Kommunikation einen Fehler aufzeigt.

Heute verwendete Überwachungsmodule, beispielsweise die Watchdog ICs CY310, CY315, CY317, CY320, weisen Fehlerzähler auf, die eine sogenannte Fehlerschwelle von fünf haben. Das bedeutet, dass von dem Überwachungsmodul in einem Kraftfahrzeug die Endstufen erst dann abgeschaltet werden, wenn der Fehlerzähler in dem Überwachungsmodul den Wert fünf erreicht.

Aus der DE 10 2004 005700 A1 ist ein Steuerungsverfahren zur Steuerung einer Kommunikation zwischen einem Funktionsrechner und einem Überwachungsmodul über ein Bussystem bekannt, wobei der Funktionsrechner mit dem Bussystem über ein Schnittstellenmodul verbindbar ist und wobei von dem Funktionsrechner ein Steuerzyklus gestartet wird, innerhalb dessen eine Kommunikation zwischen dem Funktionsrechner und dem Schnittstellenmodul erfolgt.

Aus der US 2007/016340 A1 ist ein Überwachungssystem für einen Funktionsrechner bekannt, wobei die Überwachung durch eine Frage- und Antwortkommunikation über ein Bussystem erfolgt, wobei im Falle von erkannten Fehlfunktionen das Überwachungssystem Funktionsmodule deaktivieren kann.

Aus der DE 102 05 809 ist eine Verfahren zur Überwachung der Steuerung von Betriebsabläufen bei einem Fahrzeug offenbart, wobei in einer Steuereinheit Steuerfunktionen ausgeführt werden, wobei ebenfalls Überwachungsfunktionen ausgeführt werden, welche die Steuerfunktionen überwachen.

EP 0 663 324 A1 offenbart ein Überwachungssystem zur Überwachung von Steuerfunktionen eines Funktionsrechners, wobei Überwachungsfunktionen ereignisgesteuerte und zyklische Funktionen überwachen, und der Funktionsrechner im Falle von erkannten Fehlfunktionen zurückgesetzt wird.

Aufgabe der Erfindung ist es, eine Reduzierung der Fehlerreaktionszeit in einem Überwachungssystem zur Überwachung eines Funktionsrechners durch ein Überwachungsmodul zu erreichen. Insbesondere soll eine Verkürzung der Reaktionszeit ermöglicht werden, ohne dass eine Veränderung an den bereits bekannten beziehungsweise vorhandenen Überwachungsmodulen notwendig wird.

### Offenbarung der Erfindung

Die Aufgabe der Erfindung wird gemäß den unabhängigen Ansprüchen 1 und 9 gelöst.

Durch die oben genannten Überprüfungen und die dadurch resultierenden Fallunterscheidungen ist es möglich, eine Kommunikation zwischen dem Funktionsrechner und dem Überwachungsmodul zu ermöglichen mit nur minimaler Verzögerung. Dies wird dadurch erreicht, dass in Abhängigkeit von dem aktuellen Zustand der Steuerung beziehungsweise dem Zustand des Schnittstellenmoduls entschieden wird, wie lange gewartet werden soll, bis der Steuerzyklus erneut gestartet wird, beziehungsweise bis ein erneuter Zugriff auf das Schnittstellenmodul durch den Funktionsrechner erfolgen soll.

Der Zustand der Steuerung kann vorteilhafterweise mittels einer Zustandsvariablen abgespeichert werden, wobei der Wert der Zustandsvariablen zumindest vor einer Bestimmung der jeweiligen Zeitspanne abgefragt wird. Eine derartige Zustandsvariable kann beispielsweise auch mittels eines einzigen Bits realisiert werden, was eine besonders rasche Abfrage des Zustands einerseits und einen geringen Speicherplatzbedarf andererseits ermöglicht.

Vorteilhafterweise wird in einem Steuerzyklus erst der aktuelle Zustand der Steuerung ermittelt und dann wird geprüft, ob das Schnittstellenmodul aktuell eine Instruktion abarbeitet. Dadurch wird ein leicht verzögerter Zugriff auf das Schnittstellenmodul ermöglicht, innerhalb dessen dieses möglicherweise die Abarbeitung der Instruktions-Queue beendet hat.

Gemäß einer bevorzugten Ausführungsform wird in dem Steuerzyklus auch geprüft, ob eine in einem ersten Speicherbereichs des Schnittstellenmoduls abgespeicherte Nachricht bereits ausgelesen worden ist. Diese Prüfung erfolgt zumindest dann, falls in dem Steuerzyklus festgestellt wird, dass der aktuelle Zustand der Steuerung dem ersten Zustandswert entspricht. Wird bei dieser bevorzugten Ausführungsform festgestellt, dass die Nachricht bereits ausgelesen worden ist, so wird der Zustand der Steuerung auf den zweiten Zustandswert gesetzt und es wird ein neuer Steuerzyklus nach Ablauf der ersten Zeitspanne gestartet. Falls die Nachricht jedoch noch nicht ausgelesen worden ist und das Schnittstellenmodul aktuell keine Instruktionen abarbeitet, so wird ein Auslesen der Nachricht aus dem ersten Speicherbereich veranlasst. Bei dieser Ausführungsform wird folglich auch die Zeit berücksichtigt, die der Funktionsrechner zum Auslesen einer in dem Schnittstellenmodul aktuell von dem Überwachungsmodul empfangenen Frage benötigt. Insbesondere wird hierbei auch berücksichtigt, dass das Schnittstellenmodul keine Instruktion abarbeiten kann, nachdem die Frage durch den Funktionsrechner bereits aus dem Schnittstellenmodul ausgelesen worden ist und sich die Steuerung noch in dem ersten Zustand befindet, da eine Aktivierung der Queue damit eine Abarbeitung von Instruktionen immer nur dann stattfindet, wenn Daten von dem Funktionsrechner an das Überwachungsmodul übermittelt werden. Eine Bearbeitung von Instruktionen durch das Schnittstellenmodul findet aber dann nicht statt, solange das Schnittstellenmodul eine Frage bereits an den Funktionsrechner übergeben hat, dieser jedoch das Schnittstellenmodul noch nicht zur Übermittlung einer Antwort veranlasst hat.

Vorzugsweise wird die Antwortnachricht auf die von dem Überwachungsmodul erhaltene Nachricht während der zweiten Zeitspanne von dem Funktionsrechner erzeugt. Damit entspricht die zweite Zeitspanne der minimalen, durchschnittlichen oder maximalen Zeit, die der Funktionsrechner benötigt, um die Antwort zu erzeugen.

Vorzugsweise werden die erste Zeitspanne in einem Bereich von fünf bis zehn Millisekunden, die zweite Zeitspanne in einem Bereich von eins bis zwei Millisekunden und die dritte Zeitspanne in einem Bereich von einhundert bis eintausend Mikrosekunden gewählt. Dies ermöglicht es, eine besonders kurze Reaktionszeit auch bei Verwendung bekannter Überwachungsmodule zu erreichen und dennoch den Funktionsrechner nicht über Gebühren mit der Steuerung der Kommunikation zu belasten.

Gemäß einer besonders bevorzugten Ausführungsform wird die erste Zeitspanne in Abhängigkeit davon verändert, ob das Überwachungsmodul von dem Funktionsrechner überprüft werden soll. Ist dies der Fall, so wird durch den Funktionsrechner beispielsweise eine Antwort zu einem falschen Zeitpunkt ermittelt. Dies bedeutet wiederum, dass ein Übersenden einer Nachricht früher oder später erfolgen soll, was durch Veränderung der ersten Zeitspanne besonders vorteilhaft erreicht werden kann.

Bei einer weiteren bevorzugten Ausführungsform des erfindungsgemäßen Verfahrens wird ein dem Funktionsrechner zugeordnete Fehlerzähler und ein dem Überwachungsmodul zugeordneter Fehlerzähler ausgewertet und es wird ein dem Funktionsrechner zugeordnetes Funktionsmodul deaktiviert, wenn die Summe der Fehlerzähler einen vorgebbaren Wert erreicht beziehungsweise überschreitet.

Weitere Ausführungsformen und Merkmale der Erfindung sind in den folgenden Zeichnungen dargestellt. Es zeigen:
- Figur 1: eine schematische Darstellung eines Steuergeräts, in dem ein Funktionsrechner angeordnet ist, der von einem Überwachungsmodul mittels des erfindungsgemäßen Verfahrens überwachbar ist; und
- Figur 2: eine schematische Darstellung einer Ausführungsform des erfindungsgemäßen Verfahrens mittels eines Ablaufdiagramms.

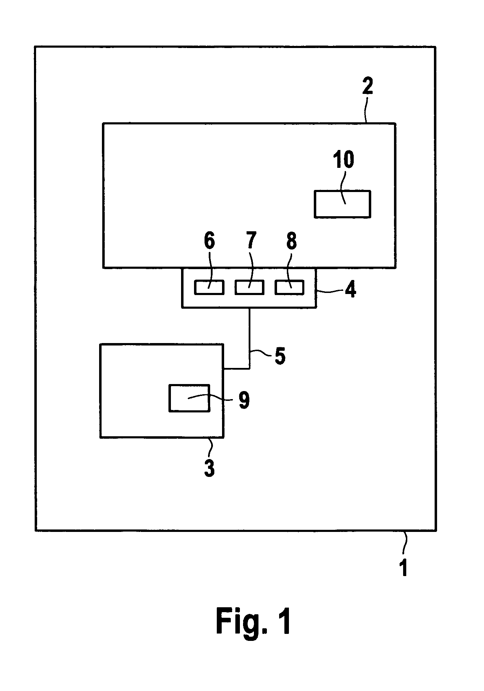

In Figur 1 ist ein Steuergerät 1 dargestellt, das einen Funktionsrechner 2 und ein Überwachungsmodul 3 aufweist. Dem Funktionsrechner 2 ist ein Schnittstellenmodul 4 zugeordnet, das mittels eines Bussystems 5 mit dem Überwachungsmodul 3 verbunden ist. Der Funktionsrechner 2 ist beispielsweise ein Embedded System, das für die Durchführung einer oder mehrerer Funktionen hergerichtet ist. Das Überwachungsmodul 3 ist beispielsweise ein sogenannter Watchdog. In dem Schnittstellenmodul 4 sind ein erster Speicherbereich 6, ein zweiter Speicherbereich 7 und ein dritter Speicherbereich 8 angeordnet. Der erste Speicherbereich ist für das Zwischenspeichern von Fragen vorgesehen, die von dem Überwachungsmodul 3 über das Bussystem 5 an den Funktionsrechner 2 übermittelt werden. Der zweite Speicherbereich 7 ist für das Zwischenspeichern von Antworten vorgesehen, die von dem Funktionsrechner 2 an das Überwachungsmodul 3 über das Bussystem 5 übermittelt werden sollen. In dem dritten Speicherbereich 8 werden von dem Funktionsrechner 2 Instruktionen abgelegt, die eine Steuerung der Arbeitsweise des Schnittstellenmoduls 4 ermöglichen.

Das Bussystem 5 ist beispielsweise als SPI-Bus ausgebildet, das eine synchrone serielle Datenkommunikation nach dem sogenannten Master-Slave-Prinzip ermöglicht. Das Bussystem 5 kann hierbei durch drei Leitungen realisiert sein, an denen jeder Teilnehmer angeschlossen ist, wobei eine Leitung für die Kommunikation von dem Funktionsrechner zu dem Überwachungsmodul, eine Leitung für die Kommunikation von dem Überwachungsmodul an den Funktionsrechner und eine Leitung für den seriellen Zeitgeber vorgesehen ist. Selbstverständlich kann das Bussystem 5 mittels einer Vielzahl weiterer bekannter Bussysteme realisiert werden.

In dem Überwachungsmodul 3 ist ein erster Fehlerzähler 9 und in dem Funktionsrechner 2 ist ein zweiter Fehlerzähler 10 angeordnet. Die Fehlerzähler 9, 10 sind beispielsweise binäre Zähler, die Werte von Null bis Fünf darstellen können. Stellt das Überwachungsmodul 3 fest, dass eine von dem Funktionsrechner 2 an das

Überwachungsmodul 3 übermittelte Antwort nicht einer erwarteten Antwort entspricht, also beispielsweise nicht in dem erwarteten Zeitfenster übermittelt worden ist oder nicht den erwarteten Inhalt hat, so veranlasst das Überwachungsmodul 3 eine Erhöhung des ersten Fehlerzählers 9. Wenn der erste Fehlerzähler 9 einen vorbestimmten Wert erreicht, so veranlasst das Überwachungsmodul 3 beispielsweise einen Reset des Funktionsrechners 2 und/oder eine Deaktivierung von Endstufen (nicht in Figur 1 dargestellt).

Von Zeit zu Zeit übersendet der Funktionsrechner 2 Antworten an das Überwachungsmodul 3, deren Inhalt nicht dem erwarteten Inhalt entspricht oder der Funktionsrechner 2 übersendet die Antworten nicht zu dem erwarteten Zeitpunkt. Stellt der Funktionsrechner dann fest, dass der erste Fehlerzähler 9 von dem Überwachungsmodul 3 nicht erhöht worden ist, so schließt der Funktionsrechner 2 auf einen Fehler bei dem Überwachungsmodul 3 und erhöht den zweiten Fehlerzähler 10. Erreicht der zweite Fehlerzähler 10 einen vorgebbaren Schwellwert, so kann dieser möglicherweise ebenfalls eine Deaktivierung der Endstufen veranlassen und/oder ein Reset des Bussystems und/oder des Überwachungsmoduls 3 veranlassen. Selbstverständlich sind eine Vielzahl weiterer Fehlerbehandlungsmöglichkeiten denkbar und vom Markt her bekannt.

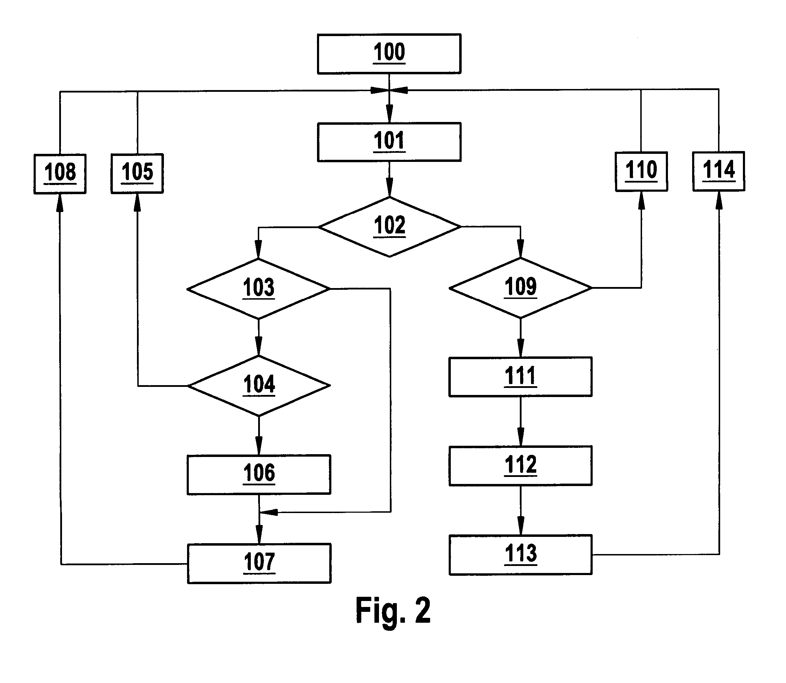

Auf dem in Figur 1 beispielhaft dargestellten Steuergerät 1 kann das erfindungsgemäße Verfahren gemäß einer ersten Ausführungsform, wie in Figur 2 dargestellt, ausgeführt werden. Das Verfahren beginnt in einem Schritt 100, in dem die Kommunikationssteuerung aktiviert wird. Dies kann beispielsweise am Ende einer Initialisierungsphase des Steuergeräts 1 erfolgen, die beispielsweise wiederum bei der Inbetriebnahme eines Kraftfahrzeugs durchgeführt wird. In dem Schritt 100 wird auch das Überwachungsmodul 3 initialisiert.

In einem Schritt 101 wird ein Steuerzyklus gestartet. Dies kann beispielsweise nach der Initialisierungsphase durch einen sogenannten Alarm-Task erfolgen. In einem Schritt 102 wird der aktuelle Zustand der Kommunikationssteuerung geprüft. Ergibt diese Prüfung, dass der Zustand einem ersten Zustandswert entspricht, so wird zu dem Schritt 103 verzweigt. Falls der aktuelle Zustand nicht dem ersten Zustandswert entspricht und insbesondere falls der aktuelle Zustand einem zweiten Zustandswert entspricht, so wird zu dem Schritt 109 verzweigt. Der erste Zustand zeigt hierbei an, dass die weitere Abarbeitung der Kommunikationssteuerung in dem aktuellen Steuerzyklus davon ausgeht, dass eine Frage von dem Überwachungsmodul 3 an den Funktionsrechner 2 übermittelt worden ist, die bearbeitet werden soll und insbesondere zu beantworten ist. Findet sich die Kommunikationssteuerung in dem zweiten Zustand, so bedeutet dies, dass eine Antwort bereits berechnet ist oder aktuell berechnet wird und diese - sobald möglich - von dem Funktionsrechner 2 mittels des Schnittstellenmoduls 4 an das Überwachungsmodul 3 übermittelt werden soll.

In dem Schritt 103 wird geprüft, ob die aktuell beispielsweise in dem ersten Speicherbereich 6 abgelegte Frage bereits von dem Funktionsrechner 2 ausgelesen worden ist. Dies kann dadurch erreicht werden, dass der Funktionsrechner die zuletzt ausgelesene Frage auswertet und beispielsweise überprüft, ob diese innerhalb eines Zeitfensters erhalten ist, innerhalb dessen noch keine Antwort übermittelt werden konnte. Wurde diese Frage bereits aus dem ersten Speicherbereich des Schnittstellenmoduls 4 ausgelesen, so ist kein Zugriff auf das Schnittstellenmodul notwendig. Es wird deshalb in einem Schritt 107 der Zustand der Kommunikationssteuerung auf den zweiten Zustandswert gesetzt und in einem Schritt 108 wird eine erneute Aktivierung eines Steuerzyklus innerhalb einer ersten vorgebbaren Zeitspanne veranlasst. Diese Zeitspanne kann insbesondere variabel und davon abhängig sein, ob die Funktion des Überwachungsmoduls geprüft werden soll. Soll eine Überprüfung stattfinden, so kann diese erste Zeitspanne bewusst vergrößert werden, so dass die Antwort zu spät bei dem Überwachungsmodul 3 eintrifft. Bei dem Start eines nächsten Steuerzyklus wird dann geprüft, ob der in dem Überwachungsmodul 3 zugeordnete Fehlerzähler 9 erhöht worden ist. Vorzugsweise wird für die erste Zeitspanne ein Bereich von fünf bis zehn Millisekunden gewählt, da dies häufig die Zeit ist, die für eine Berechnung der Antwort durch den Funktionsrechner 2 benötigt wird.

Ergibt die Abfrage in dem Schritt 103, dass die Frage noch nicht aus dem Schnittstellenmodul 4 ausgelesen worden ist, so muss auf das Schnittstellenmodul 4 zugegriffen werden. Hierzu wird zunächst in einem Schritt 104 geprüft, ob aktuell das Schnittstellenmodul 4 mit der Abarbeitung von Instruktionen beschäftigt ist, ob also die Instruktions-Queue aktiviert ist. Ist dies nicht der Fall, so wird in einem Schritt 106 die Antwort aus dem Schnittstellenmodul 4 ausgelesen, in dem Schritt 107 der Zustandswert geändert und in dem Schritt 108 eine Aktivierung nach der ersten Zeitspanne veranlasst.

Ergibt die Abfrage in dem Schritt 104 jedoch, dass das Schnittstellenmodul 4 aktuell Instruktionen abarbeitet, so wird in einem Schritt 105 die Aktivierung eines erneuten Steuerzyklus nach einer dritten Zeitspanne veranlasst. Da die Abarbeitung der Queue beziehungsweise die Ausführung der in dem dritten Speicherbereich 8 abgespeicherten Instruktionen häufig zwischen 0,1 und 1 Millisekunde liegt, wird für die dritte Zeitspanne ein Bereich von 0,1 Millisekunden gewählt. Somit kann das Schnittstellenmodul optimal ausgenutzt werden, ohne dass andere Prozesse auf den Funktionsrechner 2 blockiert werden.

Befindet sich die Kommunikationssteuerung in dem Schritt 102 in dem zweiten Zustand, so wird in einem Schritt 109 geprüft, ob aktuell eine Instruktion von dem Schnittstellenmodul 4 abgearbeitet wird. Ist dies der Fall, so ist ein Zugriff auf die Speicherbereiche des Schnittstellenmoduls 4 nicht möglich und es wird in einem Schritt 110 die Ausführung eines neuen Steuerzyklus nach der dritten Zeitspanne veranlasst.

Arbeitet das Schnittstellenmodul 4 aktuell jedoch keine Befehle ab, so wird in einem Schritt 111 die Übergabe der berechneten Antwort an das Schnittstellenmodul 4 veranlasst. Hierzu wird die berechnete Antwort beispielsweise in den zweiten Speicherbereich 7 des Schnittstellenmoduls 4 eingeschrieben.

In einem Schritt 112 wird dann die Instruktionsqueue aktiviert. Dies veranlasst das Schnittstellenmodul 4, die Antwort an das Überwachungsmodul über das Bussystem 5 zu übersenden.

In einem Schritt 113 wird der Zustand des Kommunikationssystems auf den ersten Zustandswert gesetzt. In einem Schritt 114 wird eine erneute Ausführung des Steuerzyklus nach einer zweiten Zeitspanne veranlasst. Die zweite Zeitspanne liegt beispielsweise in einem Bereich zwischen ein und zwei Millisekunden, da dies der Abarbeitungszeit für die Instruktionsqueue durch das Schnittstellenmodul 4 entspricht.

Grundsätzlich sind die Zeitspannen so gewählt, dass das Schnittstellenmodul 4 und das Bussystem 5 möglichst hoch ausgelastet sind. Andererseits sind die Zeitspannen aber auch so zu wählen, dass kein unnötiger Zugriff auf das Schnittstellenmodul 4 einerseits und kein unnötiger Durchlauf eines Steuerungszyklus andererseits erfolgt. Demzufolge sind die erste Zeitspanne und die zweite Zeitspanne beispielsweise so gewählt, wie die kleinste, mittlere oder größte zu erwartende Bearbeitungszeit. Die dritte Zeitspanne entspricht hierbei einem Bruchteil der zu erwartenden Arbeitszeit, da davon auszugehen ist, dass in den Schritten 104 und 109 die Abarbeitung der Instruktionsqueue bereits fortgeschritten ist. Ein Wert für die dritte Zeitspanne ist deshalb beispielsweise 1/10 der durchschnittlichen Abarbeitungszeit für die Instruktionsqueue durch das Schnittstellenmodul 4.

Selbstverständlich können sich je nach Verarbeitungsgeschwindigkeit des Funktionsrechners, des verwendeten Schnittstellenmoduls und des Bussystems andere Zeitspannen als vorteilhaft erweisen. Ferner kann hierbei eine mittlere Auslastung des Funktionsrechners 2 berücksichtigt werden. Bei hoher Auslastung des Funktionsrechners kann es vorteilhaft sein, die Zeitspannen größer zu wählen, wohingegen bei nur geringer Auslastung des Funktionsrechners 2 eine geringere Zeitspanne gewählt werden kann. Eine Vielzahl weiterer Ausführungsformen des erfindungsgemäßen Systems und des erfindungsgemäßen Verfahrens sind denkbar. Beispielsweise kann zu Beginn eines Steuerungszyklus zunächst geprüft werden, ob das Schnittstellenmodul 4 aktuell mit der Abarbeitung von Instruktionen beschäftigt ist. Erst anschließend könnte geprüft werden, in welchem Zustand die Kommunikationssteuerung sich aktuell befindet und es könnten dann die entsprechenden weiteren Schritte ausgeführt werden.

Häufig wird mittels eines Überwachungsmoduls 3 eine Mehrzahl von Funktionsrechnern 2 oder Peripheriemodule, die dem Funktionsrechner 2 zugeordnet sind, überwacht. Hierbei wird eine Frage von dem Überwachungsmodul an den Funktionsrechner 2 übermittelt. Dieser veranlasst dann, dass diese Frage auch an die anderen Funktionsrechner oder an die Peripheriemodule weitergeleitet werden. Jedes Peripheriemodul berechnet dann in Abhängigkeit von der erhaltenen Frage eine Teilantwort und übersendet diese Teilantwort an den Funktionsrechner 2, der als Master des Bussystems fungiert. Der Funktionsrechner 2 berechnet dann aus den Teilantworten eine gesamte Antwort und veranlasst die Übermittlung der gesamten Antwort an das Überwachungsmodul 3. Die Weiterleitung der Fragen an die Peripheriemodule könnten beispielsweise unmittelbar oder mittelbar vor dem Schritt 107 erfolgen. Eine Berechnung der Gesamtantwort aus den Teilantworten könnte mittelbar oder unmittelbar vor dem Schritt 109 erfolgen.

## Patentansprüche

1. Steuerungsverfahren zur Steuerung einer Kommunikation zwischen einem Funktionsrechner (2) und einem Überwachungsmodul (3) über ein Bussystem (5), wobei der Funktionsrechner (2) mit dem Bussystem (5) über ein Schnittstellenmodul (4) verbindbar ist und wobei von dem Funktionsrechner (2) ein Steuerzyklus gestartet wird, innerhalb dessen eine Kommunikation zwischen dem Funktionsrechner (2) und dem Schnittstellenmodul (4) erfolgt,
**dadurch gekennzeichnet, dass**
in dem Steuerzyklus ein aktueller Zustand der Steuerung überprüft wird und - geprüft wird, ob das Schnittstellenmodul (4) eine Instruktion abarbeitet, und
- falls die Überprüfung ergibt, dass das Schnittstellenmodul (4) aktuell keine Instruktion abarbeitet und ein aktueller Zustand der Steuerung einem ersten Zustandswert entspricht, wobei der erste Zustandswert anzeigt, dass das Schnittstellenmodul (4) aktuell in einem Zustand ist, in dem es Daten von dem Bussystem entgegennehmen kann und von dem Überwachungsmodul eine Antwort empfangen kann oder bereits empfangen hat, der Zustand der Steuerung auf einen zweiten Zustandswert gesetzt wird und nach Ablauf einer vorgebbaren ersten Zeitspanne ein neuer Steuerzyklus gestartet wird;
- falls das Schnittstellenmodul (4) aktuell keine Instruktion abarbeitet und sich die Steuerung in dem zweiten Zustand befindet, wobei der zweite Zustand anzeigt, dass die Steuerung nun in einem Betriebsmodus ist, in dem das Übersenden einer Antwort von dem Funktionsrechner an das Überwachungsmodule erfolgen soll, eine Antwort zur Übertragung über das Bussystem (5) bereitgestellt wird, das Schnittstellenmodule (4) zur Übertragung der Antwort veranlasst wird und nach Ablauf einer vorgebbaren zweiten Zeitspanne der Steuerzyklus erneut gestartet wird;
- falls das Schnittstellenmodul (4) aktuell Instruktionen abarbeitet, nach Ablauf einer vorgebbaren dritten Zeitspanne der Steuerzyklus erneut gestartet wird.

2. Verfahren nach Anspruch 1, **dadurch gekennzeichnet, dass** der aktuelle Zustand in einer Zustandsvariablen abgespeichert wird und der Wert der Zustandsvariable zumindest vor einer Bestimmung der Zeitspanne abgefragt wird.

3. Verfahren nach Anspruch 1 oder 2, **dadurch gekennzeichnet, dass** zunächst der aktuelle Zustand ermittelt wird und dann geprüft wird, ob das Schnittstellenmodul (4) eine Instruktion abarbeitet.

4. Verfahren nach Anspruch 3, **dadurch gekennzeichnet, dass**, falls in einem Steuerzyklus festgestellt wird, dass der aktuelle Zustand der Steuerung dem ersten Zustandswert entspricht, geprüft wird, ob eine in einem ersten Speicherbereich (6) des Schnittstellenmoduls (4) abgespeicherte Nachricht bereits ausgelesen worden ist und
- falls die Nachricht bereits ausgelesen worden ist, der Zustand der Steuerung auf den zweiten Zustandswert gesetzt wird und ein neuer Steuerzyklus nach Ablauf der ersten Zeitspanne gestartet wird;
- falls die Nachricht noch nicht ausgelesen worden ist und das Schnittstellenmodul (4) aktuell keine Instruktion abarbeitet, ein Auslesen der Nachricht aus dem ersten Speicherbereich (6) veranlasst wird.

5. Verfahren nach einem der vorangehenden Ansprüche, **dadurch gekennzeichnet, dass** die Antwortnachricht auf die von dem Überwachungsmodul (3) erhaltene Nachricht während der zweiten Zeitspanne von dem Funktionsrechner (1) erzeugt wird.

6. Verfahren nach einem der vorangehenden Ansprüche, **dadurch gekennzeichnet, dass** die erste Zeitspanne im Bereich von 5 bis 10 Millisekunden, die zweite Zeitspanne im Bereich von 1 bis 2 Millisekunden und die dritte Zeitspanne im Bereich von 0,1 bis 1 Millisekunden gewählt ist.

7. Verfahren nach einem der vorangehenden Ansprüche, **dadurch gekennzeichnet, dass** die erste Zeitspanne verändert wird in Abhängigkeit davon, ob das Überwachungsmodul (3) von dem Funktionsrechner (2) überprüft werden soll.

8. Verfahren nach einem der vorangehenden Ansprüche, **dadurch gekennzeichnet, dass** ein dem Funktionsrechner (2) zugeordneter Fehlerzähler (10) und ein dem Überwachungsmodul (3) zugeordneter Fehlerzähler (9) ausgewertet werden und wenn die Summe der Fehlerzähler (9, 10) einen vorgebbaren Wert
überschreitet, mindestens ein dem Funktionsrechner (2) zugeordnetes Funktionsmodul deaktiviert wird.

9. Steuergerät umfassend einen Funktionsrechner (2), ein Überwachungsmodul (3), ein Bussystem (5) und ein Schnittstellenmodul (4), wobei dem Funktionsrechner (2) das Schnittstellenmodul (4) zugeordnet ist, das mittels des Bussystems (5) mit dem Überwachungsmodul (3) verbunden ist, und wobei der Funktionsrechner (2) Mittel zum Starten eines Steuerzyklus aufweist, innerhalb dessen eine Kommunikation zwischen dem Funktionsrechner (2) und dem Schnittstellenmodul (4) durchführbar ist,
**dadurch gekennzeichnet, dass**
der Funktionsrechner (2) Prüfmittel zum Überprüfen eines aktuellen Zustands der Steuerung in dem Steuerzyklus und Prüfmittel zum Überprüfen, ob das Schnittstellenmodul (4) eine Instruktion abarbeitet, aufweist, und dass der Funktionsrechner (2) Mittel aufweist, um
- den Zustand der Steuerung auf einen zweiten Zustandswert zu setzen, wobei der zweite Zustandswert anzeigt, dass die Steuerung nun in einem Betriebsmodus ist, in dem das Übersenden einer Antwort von dem Funktionsrechner an das Überwachungsmodule erfolgen soll, und nach Ablauf einer vorgebbaren ersten Zeitspanne einen neuen Steuerzyklus zu starten, falls die Überprüfung ergibt, dass das Schnittstellenmodul (4) aktuell keine Instruktion abarbeitet und ein aktueller Zustand der Steuerung einem ersten Zustandswert entspricht, wobei der erste Zustandswert anzeigt, dass das Schnittstellenmodul (4) aktuell in einem Zustand ist, in dem es Daten von dem Bussystem entgegennehmen kann und von dem Überwachungsmodul eine Antwort empfangen kann oder bereits empfangen hat;
- eine Antwort zur Übertragung über das Bussystem (5) bereitzustellen ist, das Schnittstellenmodule (4) zur Übertragung der Antwort zu veranlassen und nach Ablauf einer vorgebbaren zweiten Zeitspanne den Steuerzyklus erneut zu starten, falls das Schnittstellenmodul (4) aktuell keine Instruktion abarbeitet und sich die Steuerung in dem zweiten Zustand befindet;
- nach Ablauf einer vorgebbaren dritten Zeitspanne den Steuerzyklus erneut zu starten, falls das Schnittstellenmodul (4) aktuell Instruktionen abarbeitet.

10. Steuergerät nach Anspruch 9, **dadurch gekennzeichnet, dass** der Funktionsrechner (2) Mittelt zur Durchführung eines Verfahrens nach einem der Ansprüche 2 bis 8 aufweist.

## Claims

1. Control method for controlling communication between a function computer (2) and a monitoring module (3) via a bus system (5), wherein the function computer (2) can be connected to the bus system (5) via an interface module (4) and wherein the function computer (2) starts a control cycle in which communication takes place between the function computer (2) and the interface module (4),
**characterized in that**
the control cycle involves a check on a current state of the control and a check to determine whether the interface module (4) is executing an instruction, and
- if the result of the check is that the interface module (4) is currently not executing an instruction and a current state of the control corresponds to a first state value, wherein the first state value indicates that the interface module (4) is currently in a state in which it can accept data from the bus system and can receive or has already received a response from the monitoring module, then the state of the control is set to a second state value and a new control cycle is started after a prescribable first period of time has elapsed;
- if the interface module (4) is currently not executing an instruction and the control is in the second state, wherein the second state indicates that the control is now in a mode of operation in which a response is intended to be transferred from the function computer to the monitoring module, then a response is provided for transmission via the bus system (5), the interface module (4) is prompted to transmit the response, and the control cycle is restarted after a prescribable second period of time has elapsed;
- if the interface module (4) is currently executing instructions, then the control cycle is restarted after a prescribable third period of time has elapsed.

2. Method according to Claim 1, **characterized in that** the current state is stored in a state variable, and the value of the state variable is polled at least prior to determination of the period of time.

3. Method according to Claim 1 or 2, **characterized in that** first of all the current state is ascertained and then a check is performed to determine whether the interface module (4) is executing an instruction.

4. Method according to Claim 3, **characterized in that** if a control cycle involves it being established that the current state of the control corresponds to the first state value, then a check is performed to determine whether a message stored in a first memory area (6) of the interface module (4) has already been read, and
- if the message has already been read, then the state of the control is set to the second state value and a new control cycle is started after the first period of time has elapsed;
- if the message has not yet been read and the interface module (4) is currently not executing an instruction, the message is prompted to be read from the first memory area (6).

5. Method according to one of the preceding claims, **characterized in that** the response message for the message received from the monitoring module (3) is produced by the function computer (2) during the second period of time.

6. Method according to one of the preceding claims, **characterized in that** the first period of time is chosen in the range from 5 to 10 milliseconds, the second period of time is chosen in the range from 1 to 2 milliseconds and the third period of time is chosen in the range from 0.1 to 1 millisecond.

7. Method according to one of the preceding claims, **characterized in that** the first period of time is altered on the basis of whether the monitoring module (3) is intended to be checked by the function computer (2).

8. Method according to one of the preceding claims, **characterized in that** an error counter (10) associated with the function computer (2) and an error counter (9) associated with the monitoring module (3) are evaluated and if the sum of the error counters (9, 10) exceeds a prescribable value, then at least one function module associated with the function computer (2) is deactivated.

9. Controller comprising a function computer (2), a monitoring module (3), a bus system (5) and an interface module (4), wherein the function computer (2) has the interface module (4) associated with it, said interface module being connected to the monitoring module (3) by means of the bus system (5), and wherein the function computer (2) has means for starting a control cycle within which communication between the function computer (2) and the interface module (4) can be performed,
**characterized in that**
the function computer (2) has checking means for checking a current state of the control in the control cycle and checking means for checking whether the interface module (4) is executing an instruction, and **in that** the function computer (2) has means in order
- to set the state of the control to a second state value, wherein the second state value indicates that the control is now in a mode of operation in which a response is intended to be transferred from the function computer to the monitoring module, and to start a new control cycle after a prescribable first period of time has elapsed if the result of the check is that the interface module (4) is currently not executing an instruction and a current state of the control corresponds to a first state value, wherein the first state value indicates that the interface module (4) is currently in a state in which it can accept data from the bus system and can receive or has already received a response from the monitoring module;
- to provide a response for transmission via the bus system (5), to prompt the interface module (4) to transmit the response and to restart the control cycle after a prescribable second period of time has elapsed if the interface module (4) is currently not executing an instruction and the control is in the second state;
- to restart the control cycle after a prescribable third period of time has elapsed if the interface module (4) is currently executing instructions.

10. Controller according to Claim 9, **characterized in that** the function computer (2) has means for carrying out a method according to one of Claims 2 to 8.

## Revendications

1. Procédé de commande pour commander une communication entre un ordinateur fonctionnel (2) et un module de surveillance (3) par le biais d'un système de bus (5), l'ordinateur fonctionnel (2) pouvant être relié au système de bus (5) par le biais d'un module d'interface (4) et un cycle de commande étant démarré par l'ordinateur fonctionnel (2), au sein duquel a lieu une communication entre l'ordinateur fonctionnel (2) et le module d'interface (4),
**caractérisé en ce que**
un état actuel de la commande est vérifié dans le cycle de commande et un contrôle est effectué pour déterminer si le module d'interface (4) traite une instruction et, dans le cas où le contrôle a pour résultat que le module d'interface (4) ne traite actuellement aucune instruction et un état actuel de la commande correspond à une première valeur d'état, la première valeur d'état indiquant que le module d'interface (4) se trouve actuellement dans un état dans lequel il peut accepter des données du système de bus et peut recevoir ou a déjà reçu une réponse de la part du module de surveillance, l'état de la commande est mis à une deuxième valeur d'état et un nouveau cycle de commande est démarré après écoulement d'un premier intervalle de temps pouvant être prédéfini ;
dans le cas où le module d'interface (4) ne traite actuellement aucune instruction et la commande se trouve dans le deuxième état, le deuxième état indiquant que la commande se trouve à présent dans un mode de fonctionnement dans lequel doit avoir lieu l'envoi d'une réponse de l'ordinateur fonctionnel au module de surveillance, une réponse à transmettre par le biais du système de bus (5) est délivrée, le module d'interface (4) est amené à transmettre la réponse et le cycle de commande est redémarré après l'écoulement d'un deuxième intervalle de temps pouvant être prédéfini ;
dans le cas où le module d'interface (4) traite actuellement des instructions, le cycle de commande est redémarré après l'écoulement d'un troisième intervalle de temps pouvant être prédéfini.

2. Procédé selon la revendication 1, **caractérisé en ce que** l'état actuel est mis en mémoire dans une variable d'état et la valeur de la variable d'état est interrogée au moins avant une détermination de l'intervalle de temps.

3. Procédé selon la revendication 1 ou 2, **caractérisé en ce que** l'état actuel est tout d'abord déterminé et un contrôle est ensuite effectué pour déterminer si le module d'interface (4) traite une instruction.

4. Procédé selon la revendication 3, **caractérisé en ce que** s'il est constaté, dans un cycle de commande, que l'état actuel de la commande correspond à la première valeur d'état, un contrôle est effectué pour déterminer si un message mis en mémoire dans une première zone de mémoire (6) du module d'interface (4) a déjà été lu et
dans le cas où le message a déjà été lu, l'état de la commande est mis à la deuxième valeur d'état et un nouveau cycle de commande est démarré après écoulement du premier intervalle de temps ;
dans le cas où le message n'a pas encore été lu et le module d'interface (4) ne traite actuellement aucune instruction, une lecture du message depuis la première zone de mémoire (6) est déclenchée.

5. Procédé selon l'une des revendications précédentes, **caractérisé en ce que** le message de réponse au message obtenu par le module de surveillance (3) est généré par l'ordinateur fonctionnel (2) pendant le deuxième intervalle de temps.

6. Procédé selon l'une des revendications précédentes, **caractérisé en ce que** le premier intervalle de temps est choisi dans la plage de 5 à 10 millisecondes, le deuxième intervalle de temps dans la plage de 1 à 2 millisecondes et le troisième intervalle de temps dans la plage de 0,1 à 1 milliseconde.

7. Procédé selon l'une des revendications précédentes, **caractérisé en ce que** le premier intervalle de temps est modifié suivant que le module de surveillance (3) doit ou non être contrôlé par l'ordinateur fonctionnel (2).

8. Procédé selon l'une des revendications précédentes, **caractérisé en ce qu'**un compteur d'erreurs (10) associé à l'ordinateur fonctionnel (2) et un compteur d'erreurs (9) associé au module de surveillance (3) sont interprétés et, lorsque la somme des compteurs d'erreurs (9, 10) dépasse une valeur pouvant être prédéfinie, au moins un module fonctionnel associé à l'ordinateur fonctionnel (2) est désactivé.

9. Contrôleur comprenant un ordinateur fonctionnel (2), un module de surveillance (3), un système de bus (5) et un module d'interface (4), à l'ordinateur fonctionnel (2) étant associé le module d'interface (4) qui est relié au module de surveillance (3) au moyen du système de bus (5) et l'ordinateur fonctionnel (2) présentant des moyens pour démarrer un cycle de commande, au sein duquel peut être réalisée une communication entre l'ordinateur fonctionnel (2) et le module d'interface (4),
**caractérisé en ce que**
l'ordinateur fonctionnel (2) présente des moyens de contrôle pour contrôler un état actuel de la commande dans le cycle de commande et des moyens de contrôle pour contrôler si le module d'interface (4) traite une instruction et **en ce que** l'ordinateur fonctionnel (2) présente des moyens pour
mettre l'état de la commande à une deuxième valeur d'état, la deuxième valeur d'état indiquant que la commande se trouve à présent dans un mode de fonctionnement dans lequel doit avoir lieu l'envoi d'une réponse de l'ordinateur fonctionnel au module de surveillance, et pour démarrer un nouveau cycle de commande après écoulement d'un premier intervalle de temps pouvant être prédéfini dans le cas où le contrôle a pour résultat que le module d'interface (4) ne traite actuellement aucune instruction et un état actuel de la commande correspond à une première valeur d'état, la première valeur d'état indiquant que le module d'interface (4) se trouve actuellement dans un état dans lequel il peut accepter des données du système de bus et peut recevoir ou a déjà reçu une réponse de la part du module de surveillance ;
faire délivrer une réponse à transmettre par le biais du système de bus (5), amener le module d'interface (4) à transmettre la réponse et redémarrer le cycle de commande après l'écoulement d'un deuxième intervalle de temps pouvant être prédéfini dans le cas où le module d'interface (4) ne traite actuellement aucune instruction et la commande se trouve dans le deuxième état ;
redémarrer le cycle de commande après l'écoulement d'un troisième intervalle de temps pouvant être prédéfini dans le cas où le module d'interface (4) traite actuellement des instructions.

10. Contrôleur selon la revendication 9, **caractérisé en ce que** l'ordinateur fonctionnel (2) présente des moyens pour mettre en oeuvre un procédé selon l'une des revendications 2 à 8.
